# EUROPEAN PATENT SPECIFICATION

(11) **EP 3 254 033 B1**
(45) Date of publication and mention of the grant of the patent: **13.01.2021**
(21) Application number: 15801210.4
(22) Date of filing: 02.11.2015
(51) Int. Cl.: F24D 17/00, F24H 1/20, F24H 9/00, F28D 20/00

(54) **IMPROVEMENTS IN FLUID STORAGE SYSTEMS**
VERBESSERUNGEN BEI FLÜSSIGKEITSSPEICHERSYSTEMEN
AMÉLIORATIONS APPORTÉES À DES SYSTÈMES DE STOCKAGE DE FLUIDE

(30) Priority: 02.02.2015 GB 201501709
(43) Date of publication of application: 13.12.2017
(73) Proprietor: Oxford University Innovation Limited, Botley Oxford OX2 0JB (GB)
(72) Inventor: ARMSTRONG, Peter, Cassington Oxfordshire OX29 4DB (GB); KANG, Ren, Cassington Oxfordshire OX29 4DB (GB); MCCULLOCH, Malcolm, Oxford Oxfordshire OX1 3PJ (GB)
(74) Representative: Cozens, Paul Dennis
(86) International application number: PCT/GB2015/053295
(87) International publication number: WO 2016/124877

(56) References cited:
- EP-A1- 1 273 466
- EP-A2- 1 197 645
- EP-A2- 2 439 458
- CA-A1- 2 151 881
- CN-A- 103 307 740
- DE-A1- 19 731 351
- US-A- 5 092 279

## Description

The invention relates to fluid storage systems. In particular, the invention provides a device, apparatus and method for diffusing a fluid flow into a fluid storage system. The invention also provides a device, apparatus and method for maintaining sanitary conditions in a fluid storage system.

Many conventional hot water storage tanks take advantage of natural thermal stratification by providing an outlet for drawing heated water towards the top of a tank. As heated water is drawn from the outlet it is replenished by colder water via an inlet. A problem with such tanks is that the cold water entering the tank mixes with the heated water, leading to a reduction in the temperature of the water in the tank. Heating elements may be provided for heating the water. However, when heated water is being drawn over a prolonged period of time, the heating elements used in such tanks are typically unable to heat the water at a sufficient rate to maintain the required outlet temperature and therefore the temperature of the heated water being continuously drawn from the tank outlet gradually decreases over time.

US5092279 describes a hot water storage tank with a baffle with concentric sidewalls. This document discloses a diffuser plate according to the preamble of claim 1.

A further problem in hot water storage tanks can be bacterial growth at the base of the tank where the temperature of the water is typically the lowest. In particular, cold water present towards the base of a storage tank may fail to attain temperatures greater than 49°C, which is the sterilising threshold for *Legionella* bacteria. The present invention aims to address the above mentioned problems.

According to one aspect of the invention there is provided a diffuser plate for diffusing a fluid flow, comprising: a plate having a plurality of holes for the fluid flow to pass through; and at least one wall that extends away from a surface of the plate; characterised in that the at least one wall has a generally spiral-shaped configuration across the surface of the plate. By providing a diffuser plate with at least one wall that extends away from a surface of the plate, an advantage of improved diffusion of a fluid can be afforded.

The diffuser plate and/or the at least one wall may be formed from a thermally conductive material, and preferably a material that is capable of functioning as a heat sink. Preferably, the material has a thermal conductivity greater than a fluid stored in the vessel, and preferably greater than about 0.4W/mK (the thermal conductivity of water). Examples of materials that may function as a heat sink include copper, composite materials, and aluminium alloys such as 1050A, 6061 and 6063, for example. By providing a thermally conductive material, an advantage that the diffuser plate can also act as a heat sink can be afforded. As used herein, the term "heat sink" preferably connotes a passive heat exchanger. A heat sink may transfer thermal energy from a higher temperature device to a lower temperature fluid medium, for example.

Preferably, the plate is substantially flat. Preferably, at least some of the plurality of holes are interspaced by the least one wall.

The at least one wall may have a height arranged to extend substantially to the base of the vessel. Preferably, the at least one wall has a height that varies across the surface of the plate, whereby the wall can be conformed to fit within or can extend into a shaped base of the vessel. The height of the at least one wall may decrease from a centre of the plate outwardly such that the diffuser plate can rest generally horizontally on a concave surface. Alternatively, the height of the at least one wall may increase from the centre of the plate outwardly such that the plate can rest generally horizontally on a convex surface.

As used herein, the terms "concave" and "convex" define a shape of a base of a vessel when viewed from the interior of the vessel. Such a base may also be described more broadly as being 'dome-shaped'.

Preferably, the at least one wall is arranged to define at least one fluid pathway (or channel) that extends across at least part of the surface of the diffuser plate, preferably wherein the at least one fluid pathway passes one or more of the plurality of holes, whereby a fluid flowing along the fluid pathway may pass through one or more of the plurality of holes. By providing a fluid pathway, an advantage of a more equal flow distribution can be afforded, and, optionally, the wall may provide a larger surface area for thermal conduction to the fluid.

The fluid pathway is configured to cause fluid to flow outwardly from a centre of the plate or inwardly from an outer region of the plate. The wall according to the invention has a generally spiral-shaped configuration across the surface of the plate. The plurality of holes may be arranged on the surface of the plate in a pattern that substantially corresponds to the shape of the at least one fluid pathway

Preferably, a region of the diffuser plate is devoid of holes, whereby to diffuse a plume of fluid across the surface area of the plate. The region may be provided towards a centre of the plate. The region may be generally circular. Alternatively, the region may be provided towards an outer edge of the plate.

By providing a region that is devoid of holes, an advantage can be provided that a high-velocity plume of fluid from a small inlet can be deflected into the fluid pathway, aiding the provision of an even flow distribution across the surface area of the diffuser plate. Additionally, the region that is devoid of holes can be positioned adjacent a fluid inlet and/or a tip of an ("immersion") heater element (that is immersed in fluid, in use), both of which can produce lime scale, whereby the risk of lime scale causing a blockage in one or more holes in the plate is thereby reduced.

Preferably, the plurality of holes are arranged in a configuration that corresponds with the configuration of the at least one fluid pathway, such that a plurality of holes are provided in the plate along the fluid pathway.

Preferably, the plurality of holes and/or at least one fluid pathway configuration may be arranged such that a fluid passing through the holes will have a substantially equal flow distribution across the surface area of the plate.

The plurality of holes may be of uniform size and/or shape (e.g. circular holes of constant diameter). The holes may have a regular distribution across the surface of the plate

Alternatively, the plurality of holes may have a non-uniform distribution across the surface of the plate. Furthermore, the plurality of holes may either increase in size or decrease in size, for example as their distance from a centre of the plate increases. As such, they may be of non-uniform, or different, sizes. The configuration of the holes may depend on where the fluid inlet is in the vessel relative to the plate. The plurality of holes may be arranged to define a geometric shape.

By configuring the sizing/placement of the fluid pathway and/or holes to achieve a substantially even flow equalisation, an advantage of preventing imbalances of fluid flow and mixing can be afforded. The substantially equal flow distribution will be understood not to include the boundary conditions at the sidewall of the vessel where there is essentially zero flow. The substantially equal flow distribution should preferably be understood to be observed a point somewhat above the plate to allow the flow an opportunity to even out.

The at least one wall may be formed from at least one, preferably continuous, strip of material that can be shaped to provide a desired wall configuration. The strip of material may be provided with a plurality of projections along an edge for securing the strip of material to the plate. A plurality of slots (or apertures) may be provided in the wall of the plate for receiving the projections.

By providing the at least one wall as a strip of material as described above, an advantage of improved ease of manufacturability and assembly of the diffuser plate can be provided.

The diffuser plate may be circular and may be substantially flat, concave or convex. Preferably, the plate is sufficiently rigid to prevent it deflecting under the pressure of a fluid flow. Preferably, the holes are generally circular.

The diffuser plate may be fabricated using a 3D printer. A machine readable map, or machine readable instructions, configured to enable a 3D printer may be provided to fabricate the diffuser plate.

According to another aspect of the invention there is provided an apparatus for storing a fluid, comprising a vessel having a fluid inlet and a fluid outlet; and a diffuser plate as described above, wherein the diffuser plate is positioned, in use, above the fluid inlet in the vessel.

The diffuser plate may be positioned in the base of the vessel, such that fluid entering the vessel via the fluid inlet encounters the diffuser plate, preferably at a central region of the plate.

Preferably, the at least one wall of the diffuser plate extends towards a base of the vessel.

Preferably, the at least one wall of the diffuser plate has a height that conforms to an internal shape of the base of the vessel, and wherein the diffuser plate is positioned adjacent the base of the vessel such that a fluid pathway is defined between the at least one wall and the base.

The fluid inlet may be arranged such that fluid enters the vessel along a substantially central axis of the vessel. The fluid inlet may be arranged such that fluid enters the vessel from beneath the vessel.

The vessel may have a generally dome-shaped base. Preferably, the vessel is arranged such that its longitudinal axis is substantially vertical.

A heater may be provided inside the vessel, wherein the heater is arranged to extend towards a base of the vessel, whereby to heat the diffuser plate and surrounding fluid.

Preferably, the fluid inlet is adjacent the base of the vessel. The fluid inlet may be provided through a sidewall of the vessel, whereby the inlet fluid will encounter (or collide with) the diffuser plate, preferably at an outer region of the diffuser plate. The surface of the plate at said region of the diffuser plate may be devoid of holes.

Alternatively, the fluid inlet may be arranged such that, in use, a fluid will enter the vessel from beneath the base of the vessel. Preferably, the fluid inlet is arranged such that an inlet fluid will encounter (or collide with) a central region of the diffuser plate. The central region of the diffuser plate may be devoid of holes.

The apparatus may further comprise an internal heater (provided within the vessel) that is arranged to extend towards a base of the vessel, whereby the heater can heat the diffuser plate and surrounding fluid adjacent the base of the vessel. If the diffuser plate and/or wall are thermally conductive, heat can be conducted via the diffuser plate (acting as a heat sink) from the heater to fluid adjacent the base of the vessel beneath the diffuser plate.

According to another aspect of the invention there is provided an apparatus for storing a fluid, comprising: a vessel having a fluid inlet and a fluid outlet; and a heater inside the vessel (i.e. an internal heater) that extends towards a base of the vessel, whereby the heater can heat fluid adjacent the base of the vessel.

By facilitating the provision of heat to a base of the vessel, an advantage that fluid at the base of the vessel (where the temperature tends to be lowest) can be heated to a suitable temperature to maintain sanitary conditions can be afforded.

Preferably, the heater is mounted in a sidewall of the vessel. Preferably, the heater is angled towards the base of the vessel, whereby an angled boss (mount) may be required on the sidewall such that a straight heater may be inserted at an angle. The angle subtended by the heating element and the sidewall of the vessel may be between about 25 degrees and about 60 degrees.

Alternatively, the heater may curve towards the base of the vessel, whereby the heater may have a flanged mount that may be secured to an existing port in the sidewall of the vessel to simplify manufacturing.

Preferably, a tip of the heater extends to a substantially centre-line (or axis) of the vessel diameter. The sidewall adjacent to where the heater is mounted may be angled. The vessel may have a base that is dome-shaped. Preferably, the heater is an immersion heater.

Preferably, a tip of the heater is spaced from the diffuser plate. The spacing between the heater and the diffuser plate may be between about 5mm and about 70mm. Preferably, a region of the diffuser plate provided directly beneath (or adjacent) the tip of the heater is devoid of holes.

The apparatus may further comprise a heat exchanger arranged to provide heat to the diffuser plate and/or fluid adjacent the base of the vessel from an external heat source. The heat exchanger may have a helical configuration. The heat exchanger may be arranged to physically contact the diffuser plate.

The apparatus may further comprise a temperature sensor arranged to monitor the temperature of fluid at the base of the vessel. The apparatus may further comprise a thermostat.

The apparatus may further comprise a controller for the heater, wherein the controller is configured to control the heater to maintain at least a predetermined temperature of the fluid in the base of the vessel. Preferably, the predetermined temperature is above about 50 degrees Celsius, and preferably above 52 degrees Celsius.

According to another aspect of the invention there is provided use of an apparatus as described above in a method of sterilising *Legionella* bacteria.

According to another aspect of the invention there is provided an apparatus for storing a fluid, comprising: a vessel having a fluid inlet and a fluid outlet, the fluid inlet being arranged such that fluid enters the vessel from beneath the vessel, wherein the vessel has a generally dome-shaped base.

Preferably, at least part of the fluid inlet is arranged such that fluid enters the vessel along a substantially central axis of the vessel.

The fluid inlet may further comprise a fluid conduit arranged to extend out towards a side of the vessel. Preferably, the fluid conduit is generally perpendicular to the fluid inlet. The vessel may be mounted on a stand and the fluid conduit may extend through the stand. Preferably, the dome-shaped base of the vessel is arranged to be mounted on a ring stand.

Preferably, the fluid inlet does not protrude into the vessel in any of the apparatus described herein. In each of the apparatus described herein, the fluid storage vessel is preferably cylindrical. However, other geometries are possible, such as rectangular for example. Other configurations may also be used, such as arranging the vessel to be horizontal rather than upright, for example.

According to another aspect of the invention there is provided a method of diffusing a fluid flow in a fluid storage vessel, the method comprising: providing a vessel having a fluid inlet and a fluid outlet; providing in the vessel a diffuser plate as described above; and positioning the diffuser plate, in use, above the fluid inlet.

Preferably, the method further comprises positioning the diffuser plate such that the at least one wall extends towards a base of the vessel.

A heater may also be provided inside the vessel; arranged to extend towards a base of the vessel, whereby the heater can heat the diffuser plate and fluid adjacent the base of the vessel. Advantageously, the diffuser plate may act as a heat sink in such an arrangement.

Preferably, the method further comprises configuring the height of the at least one wall to conform to an internal shape of the base of the vessel, and positioning the diffuser plate adjacent the base of the vessel such that a fluid pathway is defined between the at least one wall and the base.

Preferably, the fluid inlet is positioned adjacent the base of the vessel. The method may further comprise arranging the fluid inlet such that a fluid will enter the vessel from underneath the base of the vessel, whereby the inlet fluid will collide with a central region of the diffuser plate. Preferably, the central region of the diffuser plate is devoid of holes.

Alternatively, the method may further comprise arranging the fluid inlet through a sidewall of the vessel, whereby the inlet fluid will collide with an outer region of the diffuser plate. Preferably, the outer region of the diffuser plate is devoid of holes.

According to another aspect of the invention there is provided a method of storing a fluid, comprising: providing a vessel having a fluid inlet and a fluid outlet; and arranging the fluid inlet such that, in use, a fluid will enter the vessel from beneath the vessel, wherein the vessel has a generally dome-shaped base.

The method may further comprise connecting a fluid conduit to the fluid inlet and arranged the fluid conduit to extend out towards a side of the vessel. Preferably, the fluid conduit is arranged to be generally perpendicular to the fluid inlet. The method may further comprise mounting the vessel on a stand and arranging the fluid conduit to extend through the stand.

The method may further comprise providing a heater inside the vessel; and arranging the heater to extend towards a base of the vessel, whereby the heater can heat fluid adjacent the base of the vessel.

The method may further comprise spacing a tip of the heater from the diffuser plate. Preferably, a region of the diffuser plate provided adjacent the tip of the heater may be devoid of holes.

The method may further comprise a heat exchanger arranged to provide heat to the diffuser plate and/or fluid adjacent the base of the vessel from an external heat source. Preferably, the heat exchanger has a helical configuration. Preferably, the heat exchanger may be arranged to physically contact the diffuser plate.

According to another aspect of the invention there is provided a method of storing a fluid, comprising: providing a vessel having a fluid inlet and a fluid outlet; providing a heater inside the vessel; and arranging the heater to extend towards a base of the vessel, whereby the heater can heat fluid adjacent the base of the vessel.

Preferably, the method further comprises mounting the heater in a sidewall of the vessel. The sidewall adjacent to where the heater is mounted may be angled. The method may further comprise providing a heater that is angled towards the base of the vessel. The method may further comprise providing a heater that curves towards the base of the vessel. Preferably, the method further comprises arranging a tip of the heater to extend to a substantially centre-line of the vessel diameter.

The method may further comprise monitoring the temperature of fluid adjacent the base of the vessel, preferably using a temperature sensor. A thermostat may also be used to regulate the temperature. The method may further comprise controlling the heater to maintain the temperature of the fluid adjacent the base of the vessel at a temperature above a pre-determined temperature. The method may further comprise, on detection that a monitored temperature has fallen below a pre-determined temperature, controlling the heater to provide heat to the fluid adjacent the base of the tank at a rate such that the monitored temperature rises above the pre-determined temperature in the shortest time possible. Preferably, the pre-determined temperature is above about 50 degrees Celsius, and preferably above about 52 degrees Celsius.

It should be understood that, while it is preferable for a heater and diffuser plate to be used in combination in a vessel (such that the diffuser plate may act as a heat sink to transfer thermal energy, or heat, generated by the heater to the inlet fluid, for example), it is not essential for a heater and a diffuser plate to be used in combination to provide all of the advantages described herein.

Preferably, the fluid stored in the vessels described herein is water. However, the invention should be understood only to include, but not be limited, to arrangements that store water; the apparatus can be used with many other "fluids", as will be recognised by the skilled person. Indeed, the terms "fluid" and "water" may be used interchangeably herein.

As referred to herein, the terms "tank" and "vessel" should be understood to be interchangeable, together with any other term that describes an apparatus suitable for holding a body of heated fluid.

As referred to herein, the terms "heated water" and "hot water" should be understood to be interchangeable in relation to the present invention. In a domestic hot water tank, for example, hot water may have a temperature ranging between 40 and 60 degrees Celsius. Similarly, the terms "cold water" and "unheated" water should be understood to be interchangeable. A domestic cold water supply may range between 5 and 20 degrees Celsius, for example.

As referred to herein, the base of the vessel preferably connotes the end of a vessel into which fluid is introduced, for example if the vessel were arranged horizontally rather than upright or vertically.

As referred to herein, a good heat conducting material is a material that has an ability to transfer heat quickly, relative to its surroundings, such as water. Most metals, for example, stainless steel and copper, are good heat conducting materials when compared with water. For example, the thermal conductivity of stainless steel (10W/mK) is significantly higher than that of water (0.4W/mK). Copper (400W/mK) is an even better heat conducting material.

The apparatus is preferably used for storing hot water, but could also be used for storing chilled water. The apparatus is preferably of the kind conventionally used to store hot water in a residential property, but is not limited to this scale of use.

One or more exemplary embodiments of the invention will now be described with reference to the accompanying figures, in which:
Figure 1 shows a first embodiment of an apparatus for storing a fluid;
Figure 2 shows a base of the apparatus in Figure 1;
Figure 3 shows a side view of the base of the apparatus shown in Figure 1;
Figure 4 shows a first embodiment of a diffuser plate for a vessel having a concave base;
Figure 5 shows an upper surface of the diffuser plate;
Figure 6 shows a second embodiment of an apparatus incorporating a heat exchanger;
Figure 7 shows a heat exchanger above a diffuser plate;
Figure 8 shows a second embodiment of a diffuser plate;
Figure 9 shows a base of a third embodiment of an apparatus having a flat base incorporating a third embodiment of a diffuser plate;
Figure 10 shows an underside of the third embodiment of a diffuser plate;
Figure 11 shows a fourth embodiment of an apparatus with a fourth embodiment of a diffuser plate for a vessel having a convex base;
Figure 12 shows the underside of a fifth embodiment of a diffuser plate;
Figure 13 shows a fifth embodiment of an apparatus containing a curved heater; and
Figures 14A and 14B are alternate views of the fifth embodiment.

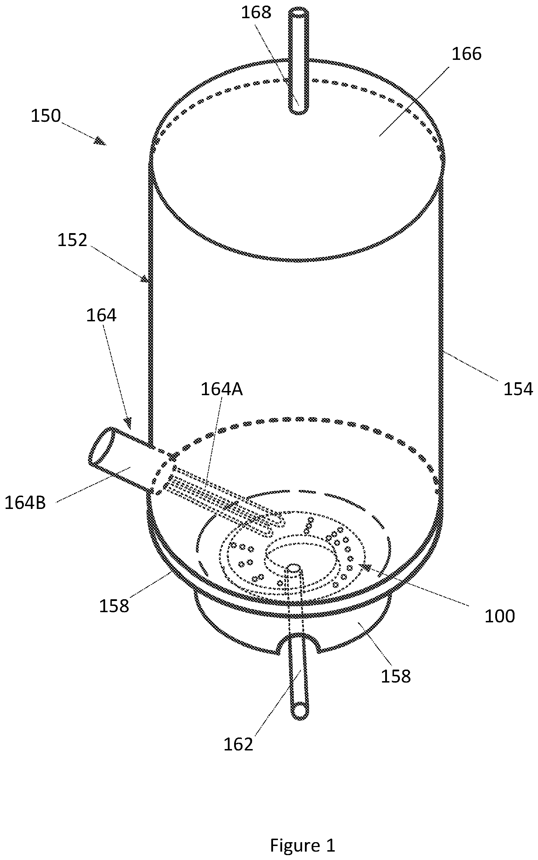

Figure 1 shows a first embodiment of an apparatus 150. The apparatus comprises a vessel 152 for storing a fluid, such as water, the vessel 152 having a substantially cylindrical sidewall 154 and a domed base 156 and top 166. A fluid inlet 160 is provided at the base 156 of the vessel 152 and a fluid outlet 168 may be provided at the top 166 of the vessel 152. The fluid inlet 160 and fluid outlet 168 may form part of the vessel 152, which is mounted upon a stand 158, though it will be appreciated that other forms of support for the vessel 152 may be used. The apparatus may also comprise a diffuser plate 100 and a heating element 164, described below.

The vessel fluid inlet 160 is arranged to such that fluid enters the vessel 152 from underneath it, when in use. The fluid inlet 160 is supplied by a fluid conduit 162, which extends away from the fluid inlet 160 towards a sidewall 154 of the vessel 152. The fluid conduit 162 may be arranged to fit past, or through, the stand 158 to supply fluid to the inlet 160 of the vessel 152 above the stand 158. In use, the fluid conduit 162 may be arranged generally horizontally.

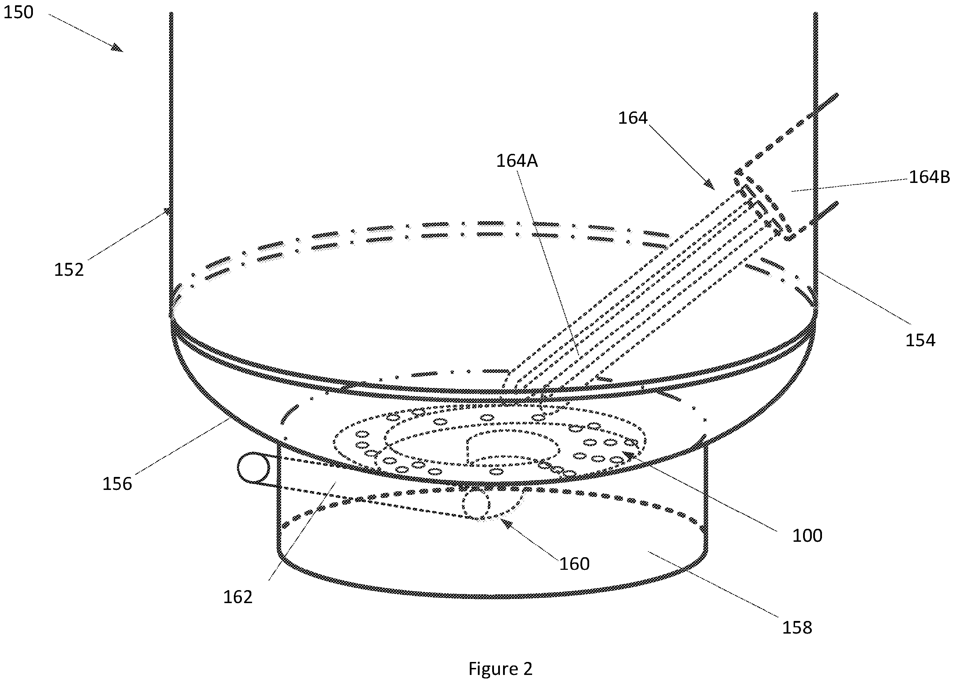

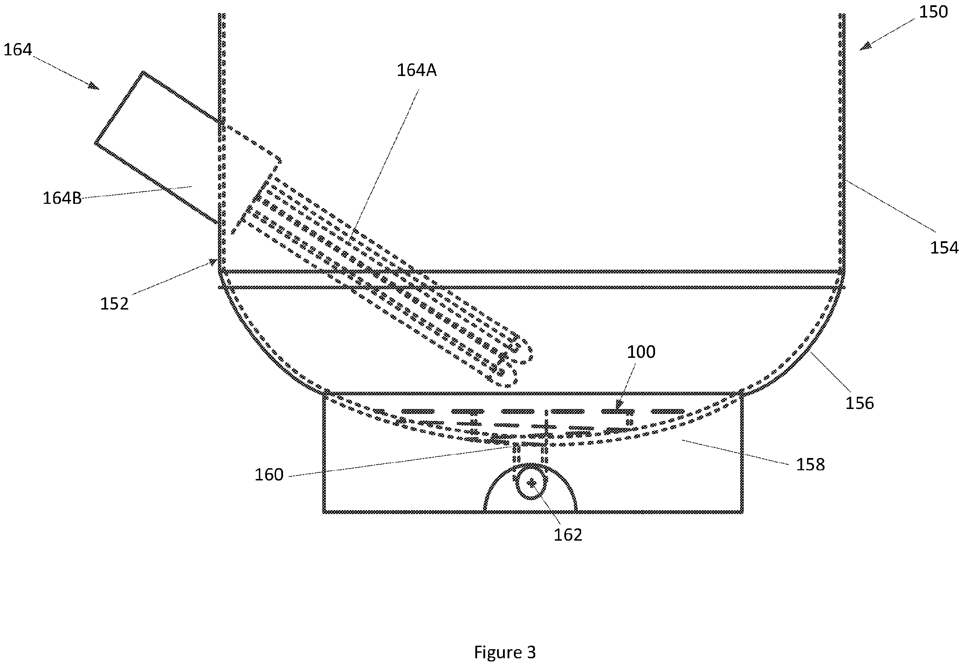

Figures 2 and 3 show the apparatus 150 comprising a vessel 152 having a diffuser plate 100 and heating element 164 installed.

The diffuser plate 100 is a device for diffusing the flow of a fluid. The purpose of the diffuser plate 100 here is to diffuse the flow of fluid entering the vessel 152 via the fluid inlet 160. The diffuser plate 100 is therefore positioned in the base 156 of the vessel 152 above the fluid inlet 160. Ideally, the diffuser plate 100 is of a suitable size and shape that ensures that there is negligible gap between the diffuser plate 100 and the sidewall 154 of the vessel 152 for liquid to pass through. The diffuser plate 100 shown has a substantially planar surface, but it may also be concave or convex. The diffuser plate 100 will be described in more detail further on.

Importantly, the fluid inlet 160 should introduce the fluid into the vessel 152 beneath the diffuser plate 100 so that the diffuser plate 100 can diffuse a plume of the liquid that may be created by the fluid exiting the fluid inlet 160, thereby inhibiting mixing between the inlet fluid and a stratified body of heated fluid already retained in the vessel 152 and present above the diffuser plate 100. In this embodiment, the inlet pipe 162 introduces fluid into the vessel 152 via an inlet opening 160 positioned at the bottom of the base 156 of the vessel 152. Fluid entering the vessel 152 will collide with the diffuser plate 100 such that the desired diffusion can occur. The size of a fluid inlet 160 may be 15mm, 22mm or 28mm in diameter, for example.

The immersion heating element 164 comprises a conductive heating part 164A and a mount part 164B. The heating element 164 is mounted into the sidewall 154 of the vessel 152 via the mount part 164B. The heating element 164 is angled such that the heating part 164A extends into the vessel 152 towards the base 156. The heating element 164 is arranged such that a distal end of the heating part 164A is spaced from the diffuser plate 100.

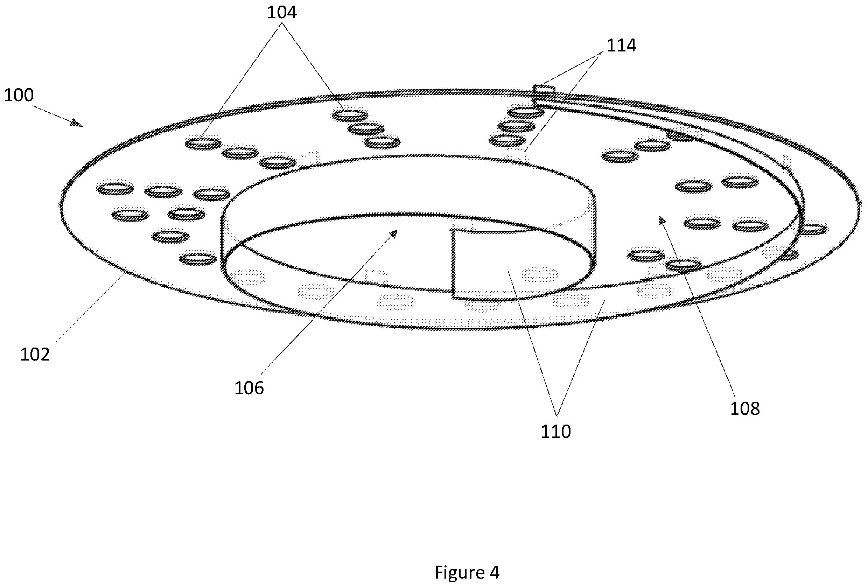

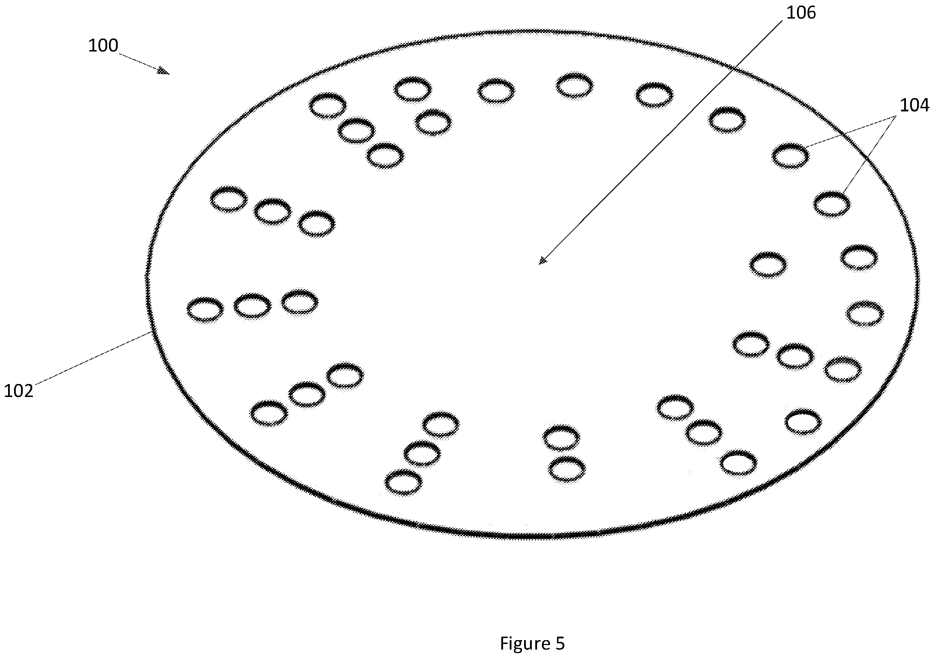

Figures 4 and 5 show a first embodiment of a diffuser plate 100 for diffusing a fluid flow, as featured in the apparatus 150 of Figures 1 to 3.

The diffuser plate 100 comprises a generally circular plate 102 having a plurality of holes 104 spaced about a surface of the plate 102. The diffuser plate 100 further comprises a at least one wall 110 extending from a surface of the plate 100, the wall 110 defining a fluid pathway 108, which is spiral-shaped and which is configured such that a plume of inlet fluid colliding with the plate 102 may flow outwardly from a central region of the plate 102 along the fluid pathway 108.

The at least one wall 110 is, ideally, provided using a material that is a good thermal conductor relative to its surroundings, which here is the fluid entering the vessel 152, such as water, for example. Stainless steel and copper are both good heat conducting materials in this context. The wall 110 may be made from a single piece (or strip) of material, which is then fashioned into shape. The wall 110 is preferably thin relative to its length and width, for example having a thickness of about 0.5mm.

The wall 110 may vary in height across the surface of the plate 102 to correspond with the convex or concave shape of a base 156 of a vessel 152. The diffuser plate 100 may rest on the base 156 when installed to substantially close off the fluid pathway 108. In this embodiment, the wall 110 decreases in height as the distance from the centre of the plate 102 increases, to correspond with the concave domed base 156 of the vessel 152 in Figure 1. The height of the wall 110 may further be configured to provide a suitable gap between the diffuser plate 100 and the fluid inlet 160 to the vessel 152, to minimise build-up of scale on the diffuser plate 100. Where the base 156 is concave or convex, the cross-sectional area of the fluid pathway 108 may vary considerably along its length.

The wall 110 may be provided with one or more projections 114 (i.e. has "tabs" or is "castellated") provided along an edge that abuts the plate 102. The plate 102 may be provided with corresponding slots (not shown), which are arranged to receive the projections 114. In another example (not shown), a plate may be provided with a groove configured to the desired fluid pathway shape, into which a wall may be slotted to facilitate assembly. A skilled person will of course recognise that there are various ways to connect a wall to the surface of a plate.

A region 106 of the plate 102 may be substantially (if not entirely) devoid of holes 104 and/or any other substantial features on it. Ideally, the "featureless" region 106 may be located on the surface of the plate 102 at a position that a plume of fluid entering the vessel 152 might be expected to collide with the plate 102, with the featureless region 106 having sufficient size to diffuse the plume of fluid across the surface of the plate 102.

The size and/or shape of the featureless region 106 may vary depending on the size of the fluid plume expected. For example, a circular plate 102 may be provided with a generally centrally located and/or generally circular featureless region 106. The featureless region 106 may, for example, have a diameter roughly equal to one fourth the diameter of the plate 102, though it should be understood that the size, shape and position of a featureless region 106 on a plate 102 is by no means limited to this exemplary ratio.

The featureless region 106 may be arranged such that a plume of fluid colliding with it will be caused to diffuse radially outwardly from the featureless region 106 towards an edge of the plate 102. The featureless region 106 may be located generally centrally in the surface of the plate 102 to provide an even outwardly diffusion in all directions. Alternatively, as will be described further on, a fluid inlet may be positioned in a sidewall of the vessel, in which case the diffuser plate may be configured such that a plume of fluid collides with the diffuser plate towards an outer region of the fluid pathway 108 and is then caused to diffuse inwardly towards a central region of the plate 102.

An additional advantage of providing a featureless region 106 is that scale may be allowed to build up in this region 106 rather than around one or more of the holes 104, where it could cause blockages. Similarly, if a fluid inlet is provided in a sidewall of the vessel, a featureless region may be provided at an outer region of the plate, where a plume of an inlet fluid will collide with the wall of the diffuser plate, to avoid blockages.

Furthermore, by positioning the featureless region 106 such that it is substantially beneath the distal end of the heating element 164, any scale falling from the distal end of the heating element 164 should fall onto the featureless region 106 of the plate 102, again reducing the possibility of blockages occurring in the holes 104.

The holes 104 may be of equal size and shape, and arranged to provide a substantially equal flow distribution of a diffused fluid across the surface area of the plate 102. Alternatively, the sizes of the holes may be tapered to provide a substantially equal flow distribution.

The plate 102 is preferably made of a single piece of substantially rigid material, which has holes 104 stamped or otherwise machined into it. The plate 102 is, ideally, made of a good heat-conducting material relative to its surroundings (e.g. water), such as copper or stainless steel. The plate is preferably quite thin relative to its diameter, having a thickness of between about 0.5mm and 1.0mm, for example. The diffuser plate 100 may be secured within a vessel 152 by means of a welding process, such as TIG welding.

As shown in Figures 1 to 3, the heating element 164 is angled with respect to the sidewall 154 of the vessel 152 towards the base of the vessel 152. Such heating elements 164 are commonly used for hot water storage systems and are therefore well-known. Preferably, the angle of the heating element 164 is between about 25 degrees and 60 degrees. As mentioned previously, the purpose of the angled arrangement is to bring the conductive heating part 164A close to the diffuser plate 100 (or simply close to the base of the vessel 152, if there is no diffuser plate 100 installed), preferably without actually contacting it. The spacing helps to prevent excessive scale build-up on the heating part 164A and, preferably, avoids any contact with the diffuser plate 100 during installation. The distal end of the conductive heating part 164A may be located about 5-70mm above the centre of the diffuser plate 100, for example.

Furthermore, by angling the heating element 164 in the sidewall 154, at least part of the conductive heating part 164A can be brought close to the base 156 of the vessel 152 without having to mount the heating element 164 in the domed section of the vessel 152, which may cause a stress concentration in the base 156. A suitably shaped (for example, 'oval-shaped') hole may be machined, pressed or otherwise removed (for example using a 'nibbler') from the sidewall 154 of the vessel 152 to accommodate the heating element 164 at a desired angle. The heating element 164 may be mounted using 38mm (1½"), 44.5mm (1¾"), or 57mm (2¼") British Standard Pipe (BSP) thread fittings, for example.

With reference to the apparatus 150 shown in Figures 1 to 3 and the diffuser plate 100 shown in Figures 4 and 5, when made from a suitable heat conducting material, the diffuser plate 100 will conduct heat from the immersion heating element 164 to any fluid beneath it in the base 156 of the vessel 152, where it is typically coolest. The plate 102 and the wall 110 provide a large surface area for efficient heat transfer to the fluid because of the relatively large surface area of the plate 102 and the tortuous fluid pathway 108 (or "labyrinth") defined by the wall 110 compared to the volume of fluid in the base 156 of the vessel 152.

The fluid may be water, in which case it should be heated to above 49°C, the sterilisation threshold of *Legionella* bacteria. More preferably, the fluid in this area should be heated to above 52°C for improved sterilisation.

Furthermore, when the diffuser plate 100 is installed in a base 156 of a vessel 152, such as shown in Figure 1, the fluid pathway 108 defined by the wall 110 is effectively closed against the base 156 such that a fluid entering the vessel 152 via a fluid inlet 160 beneath the diffuser plate 100 will be caused to diffuse outwardly along the spiral-shaped fluid pathway 108 and thereby to pass though the plurality of holes 104 provided in the plate 102.

As heated fluid is drawn from the apparatus 150 via the outlet 168 the vessel 152 is replenished (or "recharged") by cold ("unheated") fluid. The cold fluid enters the vessel 152 via the fluid inlet 160 positioned below the diffuser plate 100. As shown in Figure 1, the fluid inlet 160 is positioned at substantially the centre of the base 156 of the vessel 152, such that cold fluid entering the vessel 152 has to pass through the diffuser plate 100 in order to reach the main body of heated fluid above the diffuser plate 100.

Fluid entering the vessel 152 through the fluid inlet 160 is directed onto the featureless region 106 of the plate 102, which prevents the typically high velocity flow of fluid (or plume of fluid) from entering the main body of the vessel 152. The fluid is then channelled by the wall 110 along the spiral-shaped fluid pathway 108, out of which the fluid can flow through the holes 104. The spacing and frequency of the holes 104 along the fluid pathway 108 is arranged to provide a generally equal flow distribution of the diffused fluid across the surface of the plate 102, despite the fact that all the holes 104 may be of substantially the same size and shape. The diffuser plate 100 thus acts to slow and diffuse the flow of fluid entering the vessel 152. The spiral-shaped fluid pathway 108 defined by the wall 110 is open towards an outer edge of the plate 102, so the diffuser plate 100 uses the walls 154 of the vessel 152 in which it is fixed as an external wall of the fluid pathway 108.

This diffusion of the fluid flow entering via the fluid inlet 160 minimises mixing in the tank, which would otherwise be caused by the single jet of the inlet fluid flow forming a high velocity plume that would cause the colder inlet fluid to mix with the heated fluid above it. Such mixing would lead to de-stratification of the body of heated fluid in the tank as a result of convection currents and a consequent reduction in the volume of hot fluid which is available to be drawn from the vessel 152 via the fluid outlet 168. Therefore, the mean flow velocity of fluid exiting the diffuser plate 100 is reduced and balanced in comparison to that of a single jet, thereby reducing the entrainment of colder inlet fluid into the hot stratified region that would otherwise occur with a single high velocity jet.

By slowing and diffusing the inlet fluid flow across the width of the vessel 152, mixing and resultant convection currents are greatly reduced, resulting in the fluid in the vessel 152 remaining stratified despite the inlet flow of cold fluid. Thus, in continuous use, suitably hot fluid can be drawn from the apparatus 150 over a longer time period than if the diffuser plate 100 were not in place.

As a result of this improvement, an apparatus as described above may be used in place of a larger conventional apparatus, supplying the same volume of hot fluid. The reduced size of the apparatus required is advantageous in that standing heat losses are reduced as a result of the smaller surface area of the apparatus. Additionally, where an apparatus as described above replaces a larger conventional apparatus, the space freed up by installing a smaller apparatus may be filled with more thermal insulating material, further reducing standing heat losses.

As mentioned previously, an additional advantage of the heating element 164 being angled into the vessel 152 towards the base 156 is that it is less susceptible to scale build-up, which is detrimental for thermal performance. Calcium Carbonate has an inverse relationship between its solubility in solution and the temperature of fluid it is dissolved in. When the heating element is turned on, there is a temperature gradient between the element and surrounding fluid which leads to a solubility gradient as well leading to a migration of Ca+ ions to the element's surface. The scale tends to build up and then, as the heating element expands and contracts due to thermo-cycling, cracks off and ends up deposited on the bottom of the tank like a sediment/sand material. Therefore, by angling the heating element 164, as the scale sediment depth in the bottom of the tank rises over time (typically many years), the fraction of the heating element 164 surface that is buried is reduced leading to lower heat losses and thermal stress/failure rates during operation.

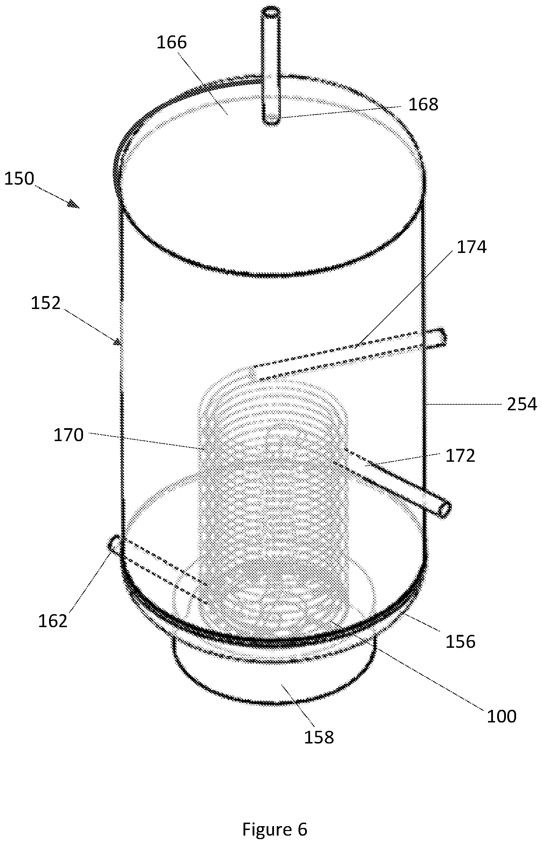

Figure 6 shows an alternative embodiment of an apparatus 150. This apparatus 150 incorporates a helical heat exchanger 170 comprising an inlet 172 and an outlet 174 in place of the heating element 164. The lowest part of the heat exchanger 170 is positioned close to or in contact with the diffuser plate 100 so as to promote sanitary conditions in the base 156 of the vessel 152.

This embodiment of the apparatus 150 may be useful where a renewable heat source (not shown), which could be provided using a solar thermal system or heat pump, for example, provides a heat source (e.g. heated fluid) for the heat exchanger 170. Alternatively, the apparatus 150 could be used with a typical gas boiler (not shown) providing the heat source for the heat exchanger 170.

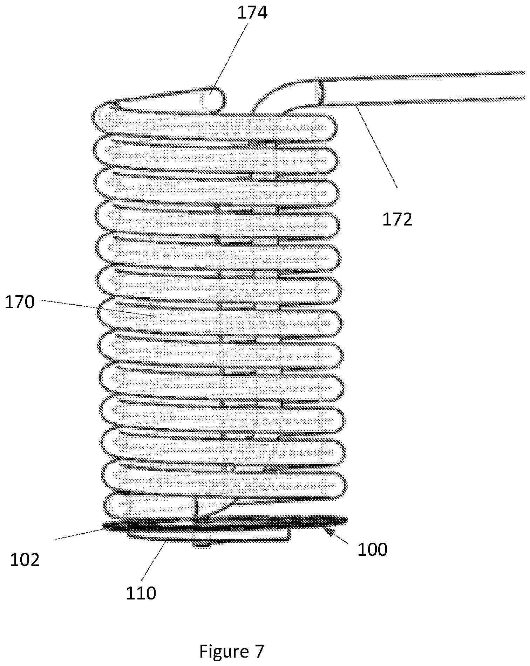

Figure 7 shows the heat exchanger 170 and diffuser plate 100, as described above, in isolation.

It will be appreciated that, in a further alternative configuration (not shown), a heat exchanger 170 may be used in the apparatus 150 together with the immersion heating element 164 previously discussed. In such an arrangement, the heat exchanger 170 may be offset from the diffuser plate 100 and/or is shaped to allow the immersion heating element 164 to be sufficiently close to the diffuser plate 100 for the desired heat conduction to occur. This further alternative configuration may be useful where the output of the heat source for the heat exchanger 170 may vary or be otherwise inconsistent, such as with a renewable heat source, for example. As such, the immersion heating element 164 may be used to supply heat to maintain sanitary conditions at the base 156 of the vessel 152 when the heat exchanger 170 is unable to meet demand.

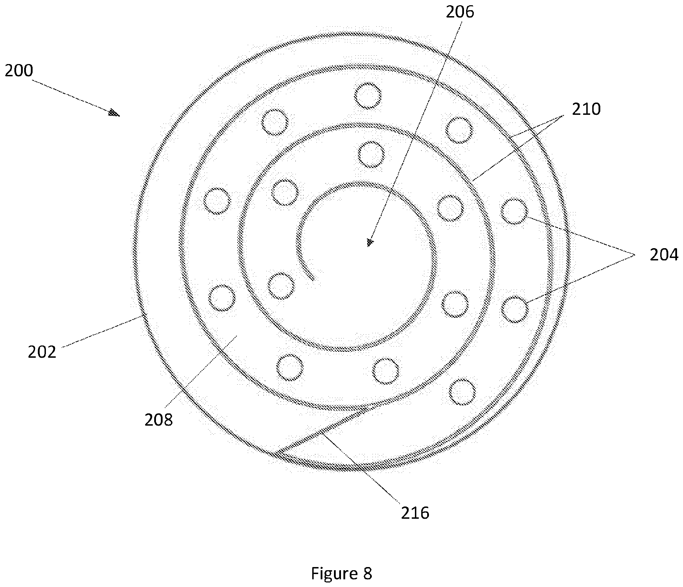

Figure 8 shows a second embodiment of a diffuser plate 200, which comprises a plate 202 having a featureless region 206 located generally centrally on the surface of the plate 202, a plurality of holes 204, and a wall 210 defining a spiral-shaped fluid pathway 208.

Relative to the first embodiment of the diffuser plate 100, the spiral-shaped fluid pathway 208 is longer, providing a greater surface area of wall 210 for heat conduction. The end of the spiral-shaped fluid pathway 208 nearest the edge of the plate 202 is closed by a section 216 of wall 210.

The holes 204 are arranged substantially equidistantly around the spiral-shaped fluid pathway 208 and are of substantially equal size and shape. Unlike the first embodiment of the diffuser plate 100, shown in Figures 4 and 5, holes 204 are provided individually (rather than being grouped together) along the tighter fluid pathway 208 defined by the wall 210. Although the arrangement of holes 204 differs from that of the first embodiment of the diffuser plate 100, the holes are again preferably configured to provide a substantially equal flow distribution of liquid that has been diffused along the fluid pathway 208 across the surface of the diffuser plate 200.

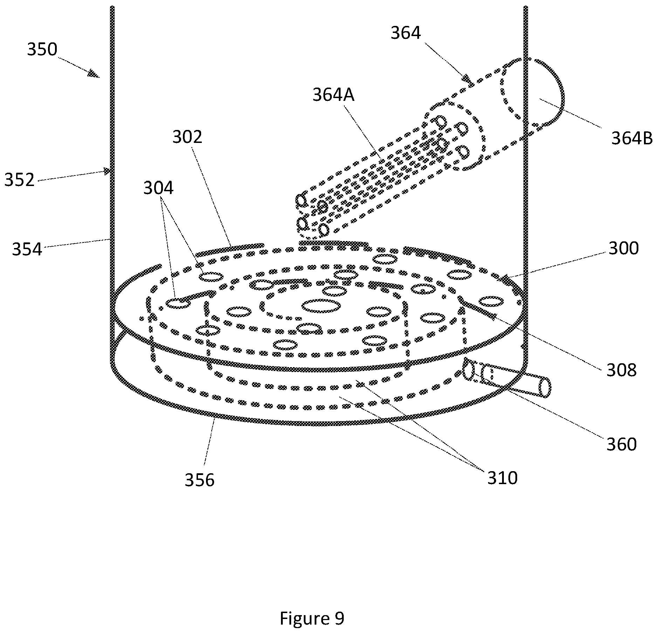

Figure 9 shows another embodiment of an apparatus 350 comprising a vessel 352 having a substantially flat base 356, and incorporating a third embodiment of a diffuser plate 300. A fluid inlet 360 is located on a sidewall 354 of the vessel 352 towards the base 356.

The diffuser plate 300 comprises a plate 302 having a wall 310 defining a spiral-shaped fluid pathway 308 and a plurality of holes 304 of substantially equal size and shape spaced along the fluid pathway 308. In common with the previous embodiments, the holes 304 in the plate 302 are arranged to provide a substantially equal flow distribution of fluid across the width of the vessel 352. In this embodiment, the base 356 is substantially flat and therefore the heights of the wall 310 are substantially constant. This means that the area of the fluid pathway 308 does not vary, unlike in previously shown embodiments, improving the provision of an even flow distribution.

The fluid inlet 360 introduces fluid into the vessel 352 beneath the plate and directly into an outer region of the spiral-shaped fluid pathway 308. A plume of fluid entering the vessel 352 collides with a portion of wall 310 near the fluid inlet 360 and is thereby caused to travel along the spiral-shaped fluid pathway 308 towards a centre of the plate 302, passing though the holes 304 as it flows. Therefore, holes 304 may be provided at the centre of the surface of the plate 302 to help facilitate a substantially equal flow distribution of the fluid. A suitable stand-off distance between the fluid inlet 360 and the nearest hole 304 may be provided to avoid potential blockages at the fluid inlet 360 from scale build-up.

The apparatus 350 is further provided with a heating element 364 comprising a conductive heating part 364A and a mount 364B, which is mounted in the sidewall 354 of the vessel 352. Due to the substantially flat base 356, the heating element 364 in this embodiment may be mounted lower down in the sidewall 354, closer to the base 356, than in configurations with domed bases. As a result of this, the heating element 364 may be arranged to be substantially horizontal, rather than angled towards the base 356, such that it is generally parallel with the base 356 and diffuser plate 300. As a result, more of the heating part 364A can provide heat to the diffuser plate 300. However, vessels typically have a domed base to relieve tensile stress so that a thinner material can be used for the wall.

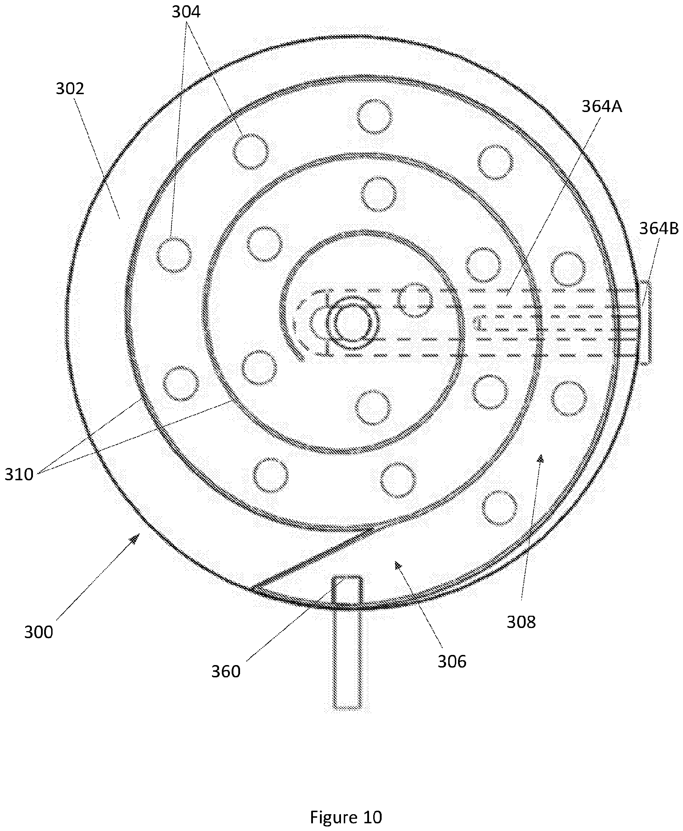

Figure 10 shows a view of the underside of the third diffuser plate 300 embodiment of Figure 9. It can be seen that the fluid inlet 360 introduces the fluid into a featureless region 306 of the plate 302, from where it flows along the fluid pathway 308.

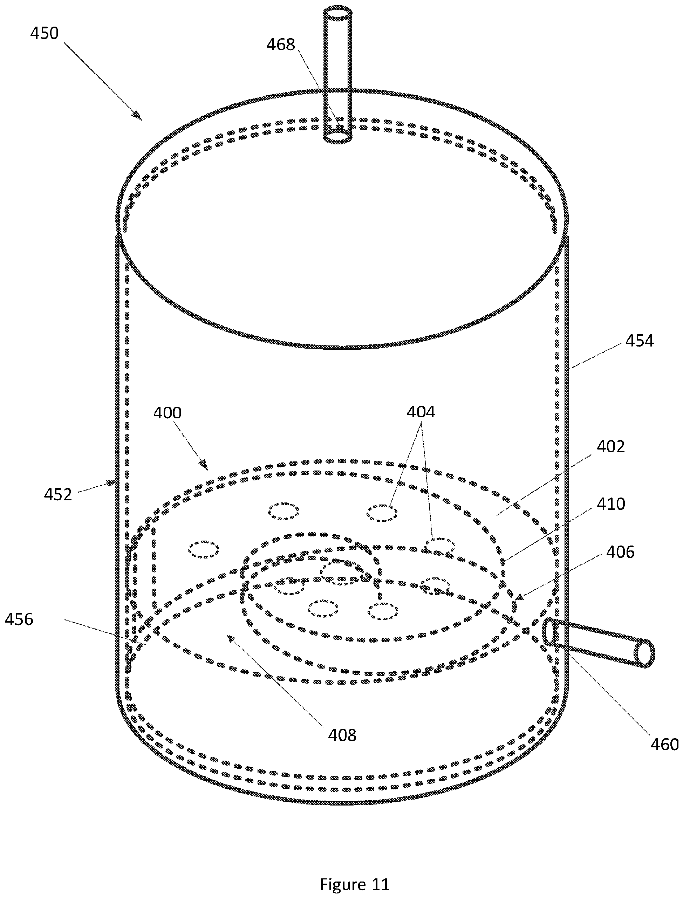

Figure 11 shows an apparatus 450 comprising a vessel 452 having a convex base 456. A fourth embodiment of a diffuser plate 400 is shown, comprising a plate 402, a plurality of holes 404, and a wall 410 defining a spiral-shaped fluid pathway 408. The height of the wall 410 increases as the distance towards the edge of the plate 402 decreases, so that the wall 410 corresponds with the convex-shaped base 456.

The holes 404 are tapered, in that their size increases along the fluid pathway 408 from a region near the fluid inlet 460 towards a central region of the plate 402. This tapered arrangement of holes 404 is configured to provide an equal flow distribution of a fluid across the surface of the plate 402. This arrangement allows finer control of flow distribution for the situation where arrangements of holes 404 of the same size may not be able to provide an even flow for a given apparatus. However, it also carries the disadvantage that holes 404 of varying size are less easy to manufacture and that the smaller holes are susceptible to blocking from scale deposit build-up. Additionally, the use of tapered holes may result in a greater drop in flow pressure across the diffuser plate 400. As an example, the hole size may vary from around 3mm to around 28mm, although other holes sizes may be used to create a substantially equal flow distribution across the surface area of the plate to minimise the overall amount of mixing that occurs.

A featureless region 406 of the plate 402 is provided by the fluid inlet 460, to ensure the fluid flows along the fluid pathway 408 and also to avoid blockages caused by scale build up at the fluid inlet 460, as described previously. As the fluid inlet is located at the sidewall 454, holes 404 may be provided at a central region of the plate 402 to help ensure a substantially equal flow distribution across the surface of the plate 402.

An immersion heating element is not shown with this embodiment so as to allow the diffuser plate 400 to be seen clearly. However, it will be understood that an immersion heater element could be added, similar as to the previously discussed embodiments.

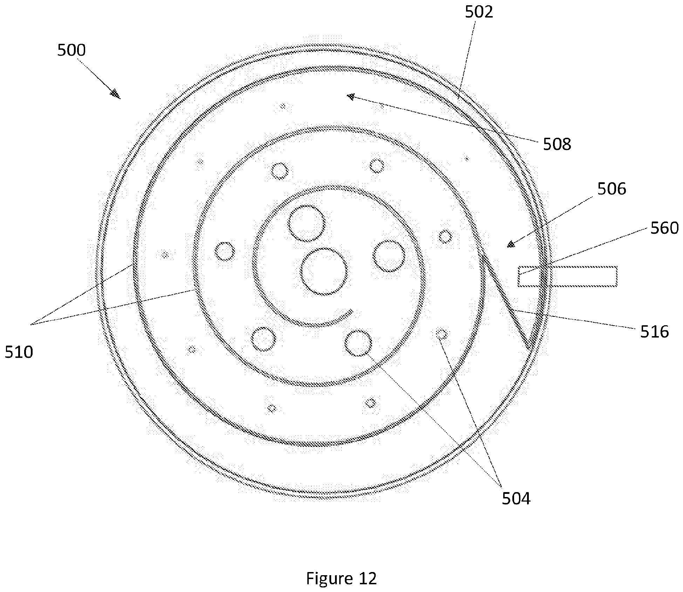

Figure 12 shows the underside of a fifth embodiment of a diffuser plate 500, having a plurality of holes 504 spaced a fluid pathway 508 defined by a wall 510 attached to a plate 502 of the diffuser plate 500. This fifth embodiment of a diffuser plate 500 is similar to the fourth embodiment of a diffuser plate 400, wherein a fluid inlet 560 is arranged to introduce fluid into a vessel at an outer region of the diffuser plate 500 where there is a featureless region 506 of the plate 502 and a wall portion 516 closing off the flow pathway 508, and wherein the size of the holes 504 increases towards the centre of the plate 502. There are more turns in the spiral-shaped fluid pathway 508 of this fifth embodiment, which both aids the provision of a substantially equal flow distribution and also provides a greater surface area for heat conduction to fluid beneath the diffuser plate 500 in the base of a vessel.

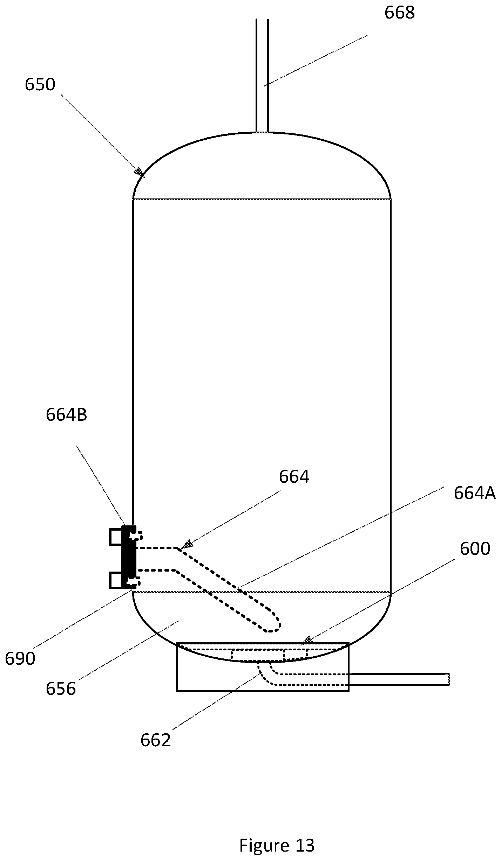

Figure 13 shows an embodiment of vessel 650 containing a heating element 664 arranged such that its heating part 664A has a bent (or "curved") configuration. This heating element 664 is provided with a flanged mount part 664B that allows it to be mounted to a conventional heater port 690, which is typically provided in a side wall of a vessel 650. The bend in the heating part 664A is configured to angle it towards a diffuser plate 600 (e.g. any of the diffuser plate arrangements described herein) disposed in the domed base 656 of the vessel 650. From a high volume manufacturing perspective, a flanged mounting arrangement such as the one shown here may be preferred over the combination of a straight heating part with an angled mount part (or "boss"), similar to what is described above. It may also be easier to insulate a flanged mounting arrangement.

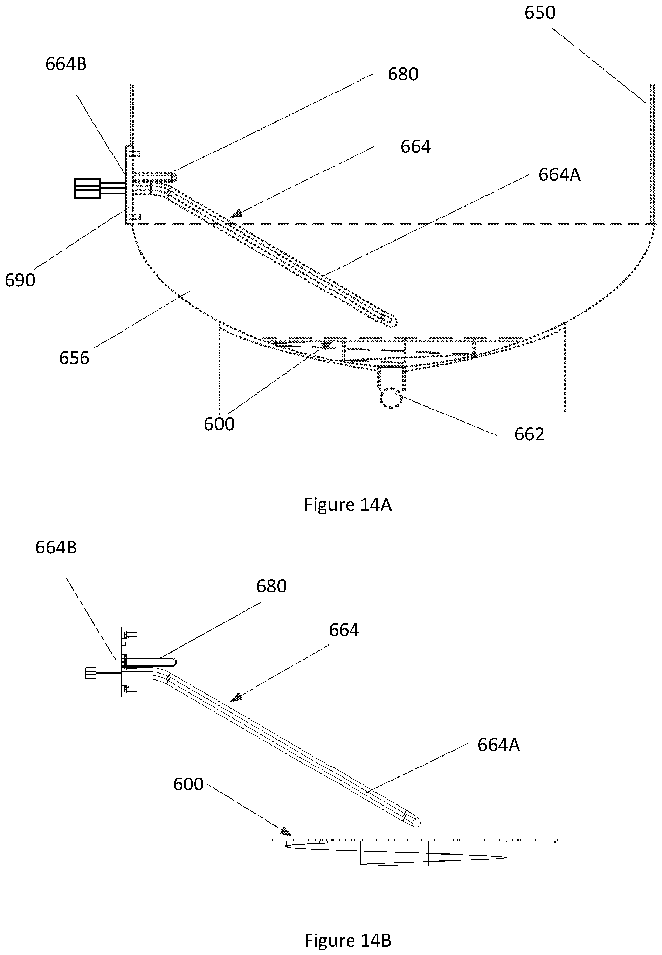

Figures 14A and 14B show a similar arrangement to Figure 13, but with the addition of a thermostat 680 for regulating the temperature of the fluid in the vessel, which in this example is attached to the mount part 664B. Figure 14A shows the arrangement of a bent (or curved) heater spaced from a diffuser plate 600, which is disposed above the fluid inlet 662 in a vessel 650. Figure 14B shows the same arrangement of the diffuser plate 600 and heater 664, but without the vessel. A gap is provided between the diffuser plate 600 and the tip of the heating part 664A. As mentioned above, the flanged mount part 664B can be fitted to a standard heater port 690 in a vessel 650.

In a further embodiment (not shown), an apparatus may be provided that comprises a vessel having an immersion heating element angled towards the base of the vessel, where the fluid is coolest to maintain sanitary conditions, without a diffuser plate provided to diffuse the fluid inlet or conduct heat from the heating element therethrough. Alternatively, if the vessel has a flat base, the heating element could be positioned proximate to the base of the vessel, low down on the side wall.

The apparatus may further incorporate a controller (not shown) for the heating element 164, 364. This controller may be aware of the particular thermal time constant of the apparatus, either by design or by use of one or more optional temperature sensors (not shown), along with the relationship between temperature and bacterial growth rate. This information can be used by the controller to estimate a worst case population of bacteria in the fluid. The heating element 164, 364 can then be controlled to maintain the temperature of the fluid in the spiral-shaped fluid pathway above a predetermined value to maintain the population of bacteria beneath a pathogenic threshold whilst minimising the amount of time that the tank is kept heated.

The spacing of holes and/or hole sizes can be determined by, for example, using a one dimensional flow model where roughness values may be assumed for the walls of the fluid pathway and each linear section of the fluid pathway may be approximated by a finite element. It is possible then to solve iteratively for the hole sizes and/or distribution to remove any imbalance in flow velocity through the holes.

Alternatively, it may be possible to use a finite volume model or a finite element computational fluid dynamic (CFD) model of the entire geometry to compute the entire flow field and iteratively change the geometry accordingly. If necessary, of course, both finite volume and finite element CFD models can be used.

Ideally, the plate and wall may be formed form stainless steel, which is laser cut to form the desired components. The wall may be rolled and hand twisted in place once interlocked with the plate. The wall may be welded to the plate.

Alternatively, the diffuser plate and/or its components may be formed using any suitable manufacturing process, such as stamping, cast/forging, milling, sintering and other well-known manufacturing methods.

Furthermore, the diffuser plate may be manufactured by way of '3D printing' whereby a three-dimensional (3D) model of the surface is supplied, in machine readable form, to a '3D printer' adapted to manufacture the diffuser plate. This may be by additive means such as extrusion deposition, Electron Beam Freeform Fabrication (EBF), granular materials binding, lamination, photo-polymerization, or stereo-lithography or a combination thereof.

The machine readable 3D model may comprise a spatial map of the object or pattern to be printed, typically in the form of a Cartesian coordinate system defining the object's or pattern's surfaces. This spatial map may comprise a computer file which may be provided in any one of a number of file conventions. One example of a file convention is a STL (STereoLithography) file which may be in the form of ASCII (American Standard Code for Information Interchange) or binary and specifies areas by way of triangulated surfaces with defined normals and vertices. An alternative file format is AMF (Additive Manufacturing File) which provides the facility to specify the material and texture of each surface as well as allowing for curved triangulated surfaces. The mapping of the surface may then be converted into instructions to be executed by 3D printer according to the printing method being used. This may comprise splitting the model into slices (for example, each slice corresponding to an x-y plane, with successive layers building the z dimension) and encoding each slice into a series of instructions.

The instructions sent to the 3D printer may comprise Numerical Control (NC) or Computer NC (CNC) instructions, preferably in the form of G-code (also called RS-274), which comprises a series of instructions regarding how the 3D printer should act. The instructions vary depending on the type of 3D printer being used, but in the example of a moving print head the instructions include: how the print head should move, when / where to deposit material, the type of material to be deposited, and the flow rate of the deposited material.

The diffuser plate as described herein may be embodied in one such machine readable model, for example a machine readable map or instructions, for example to enable a physical representation of said diffuser plate or apparatus to be produced by 3D printing. This may be in the form of a software code mapping of the diffuser plate and/or instructions to be supplied to a 3D printer (for example numerical code).

It will be understood that the present invention has been described above purely by way of examples, and modifications of detail can be made within the scope of the invention as defined by the claims. Reference numerals appearing in the claims are by way of illustration only and shall have no limiting effect on the scope of the claims.

## Claims

1. A diffuser plate (100 200 300 400 500 600) for diffusing a fluid flow in a fluid storage vessel (152 352 452 650), comprising:
a plate (102 202 302 402 502) having a plurality of holes (104 204 304 404 504) for the fluid flow to pass through; and
at least one wall (110 210 310 410 510) that extends away from a surface of the plate (102 202 302 402 502);
**characterised in that** the at least one wall (110 210 310 410 510) has a generally spiral-shaped configuration across the surface of the plate (102 202 302 402 502).

2. A diffuser plate (100 200 300 400 500 600) according to Claim 1, wherein the at least one wall (110 210 310 410 510) is provided on a surface of the plate (102 202 302 402 502) that is arranged to receive the fluid flow, preferably wherein the plate (102 202 302 402 502) is substantially flat.

3. A diffuser plate (100 200 300 400 500 600) according to any preceding claim, wherein at least some of the plurality of holes (104 204 304 404 504) are interspaced by the least one wall (110 210 310 410 510).

4. A diffuser plate (100 200 300 400 500 600) according to any preceding claim, wherein the plate (102 202 302 402 502) and/or the at least one wall (110 210 310 410 510) are formed from a thermally conductive material capable of functioning as a heat sink.

5. A diffuser plate (100 200 300 400 500 600) according to any preceding claim, wherein the at least one wall (110 210 310 410 510) is arranged to define at least one fluid pathway that extends across at least part of the surface of the plate (102 202 302 402 502), wherein the at least one fluid pathway passes one or more of the plurality of holes (104 204 304 404 504), preferably wherein the plurality of holes (104 204 304 404 504) are arranged on the surface of the plate (102 202 302 402 502) in a pattern that substantially corresponds to the shape of the at least one fluid pathway.

6. A diffuser plate (100 200 300 400 500 600) according to any preceding claim, wherein the at least one wall (110 210 310 410 510) is formed from at least one continuous strip of material.

7. A diffuser plate (100 200 300 400 500 600) according to any preceding claim, wherein the plurality of holes (104 204 304 404 504) are arranged such that a fluid passing through the holes (104 204 304 404 504) will have a substantially equal flow distribution across the surface area of the plate (102 202 302 402 502), preferably wherein the plurality of holes (104 204 304 404 504) have a non-uniform distribution across the surface of the plate (102 202 302 402 502).

8. A diffuser plate (100 200 300 400 500 600) according to any preceding claim, wherein the plurality of holes (104 204 304 404 504) have non-uniform sizes, preferably wherein the plurality of holes (104 204 304 404 504) decrease in size as their distance from the centre of the plate (102 202 302 402 502) increases.

9. A diffuser plate (100 200 300 400 500 600) according to any preceding claim, wherein a region of the plate (102 202 302 402 502) is devoid of holes (104 204 304 404 504), whereby to diffuse a plume of fluid received from a fluid inlet across the surface of the plate (102 202 302 402 502).

10. Apparatus for storing a fluid, comprising:
a vessel (152 352 452 650) having a fluid inlet and a fluid outlet; and
a diffuser plate (100 200 300 400 500 600) according to any of claims 1 to 9; wherein the diffuser plate (100 200 300 400 500 600) is positioned above the fluid inlet in the vessel (152 352 452 650).

11. Apparatus according to Claim 10, wherein the at least one wall (110 210 310 410 510) of the diffuser plate (100 200 300 400 500 600) has a height arranged to extend substantially to the base of the vessel (152 352 452 650).

12. Apparatus according to Claim 10 or 11, wherein the height of the at least one wall (110 210 310 410 510) varies across the surface of the plate (102 202 302 402 502), such that the at least one wall (110 210 310 410 510) can extend into a shaped base of the vessel (152 352 452 650).

13. Apparatus according to any of Claims 10 to 12, wherein the diffuser plate (100 200 300 400 500 600) is positioned in the base of the vessel (152 352 452 650), such that fluid entering the vessel (152 352 452 650) via the fluid inlet encounters the diffuser plate (100 200 300 400 500 600), preferably at a central region of the plate (100 200 300 400 500 600).

14. Apparatus according to any of Claims 10 to 13, further comprising a heater (164 170 364 664) provided inside the vessel (152 352 452 650), wherein the heater (164 170 364 664) is arranged to extend towards a base of the vessel (152 352 452 650), whereby to heat the diffuser plate (100 200 300 400 500 600) and surrounding fluid.

15. A method for diffusing a fluid flow in a fluid storage vessel (152 352 452 650), the method comprising:
providing a vessel (152 352 452 650) having a fluid inlet and a fluid outlet;
providing in the vessel (152 352 452 650) a diffuser plate (100 200 300 400 500 600) according to any of claims 1 to 9; and
positioning the diffuser plate (100 200 300 400 500 600), in use, above the fluid inlet.

## Patentansprüche

1. Diffusorplatte (100 200 300 400 500 600) zum Diffundieren eines Fluidstroms in einem Fluidspeichergefäß (152 352 452 650), umfassend:
eine Platte (102 202 302 402 502), die eine Vielzahl von Löchern (104 204 304 404 504) aufweist, durch die der Fluidstrom strömen kann; und
mindestens eine Wand (110 210 310 410 510), die sich von einer Oberfläche der Platte (102 202 302 402 502) weg erstreckt;
**dadurch gekennzeichnet, dass** die mindestens eine Wand (110 210 310 410 510) über die Oberfläche der Platte (102 202 302 402 502) eine allgemein spiralförmige Konfiguration aufweist.

2. Diffusorplatte (100 200 300 400 500 600) nach Anspruch 1, wobei die mindestens eine Wand (110 210 310 410 510) auf einer Oberfläche der Platte (102 202 302 402 502) vorgesehen ist, die dafür ausgelegt ist, den Fluidstrom aufzunehmen, vorzugsweise wobei die Platte (102 202 302 402 502) im wesentlichen flach ist.

3. Diffusorplatte (100 200 300 400 500 600) nach einem der vorhergehenden Ansprüche, wobei mindestens ein Teil der Vielzahl von Löchern (104 204 304 404 504) von der mindestens einen Wand (110 210 310 410 510) beabstandet ist.

4. Diffusorplatte (100 200 300 400 500 600) nach einem der vorhergehenden Ansprüche, wobei die Platte (102 202 302 402 502) und/oder die mindestens eine Wand (110 210 310 410 510) aus einem wärmeleitenden Material gebildet sind, das als Kühlkörper fungieren kann.

5. Diffusorplatte (100 200 300 400 500 600) nach einem der vorhergehenden Ansprüche, wobei die mindestens eine Wand (110 210 310 410 510) dafür ausgelegt ist, mindestens einen Fluidweg zu definieren, der sich über mindestens einen Teil der Oberfläche der Platte (102 202 302 402 502) erstreckt, wobei der mindestens eine Fluidweg eines oder mehrere der Vielzahl von Löchern (104 204 304 404 504) passiert, vorzugsweise, wobei die Vielzahl von Löchern (104 204 304 404 504) auf der Oberfläche der Platte (102 202 302 402 502) in einem Muster angeordnet ist, das im Wesentlichen der Form des mindestens einen Fluidpfads entspricht.

6. Diffusorplatte (100 200 300 400 500 600) nach einem der vorhergehenden Ansprüche, wobei die mindestens eine Wand (110 210 310 410 510) aus mindestens einem durchgehenden Materialstreifen gebildet ist.

7. Diffusorplatte (100 200 300 400 500 600) nach einem der vorhergehenden Ansprüche, wobei die Vielzahl von Löchern (104 204 304 404 504) so angeordnet ist, dass ein durch die Löcher (104 204 304 404 504) strömendes Fluid eine im Wesentlichen gleiche Strömungsverteilung über den Oberflächenbereich der Platte (102 202 302 402 502) aufweist, vorzugsweise wobei die Vielzahl von Löchern (104 204 304 404 504) eine ungleichmäßige Verteilung über die Oberfläche der Platte (102 202 302 402 502) aufweist.

8. Diffusorplatte (100 200 300 400 500 600) nach einem der vorhergehenden Ansprüche, wobei die Vielzahl von Löchern (104 204 304 404 504) ungleichmäßige Größen aufweist, vorzugsweise, wobei die Vielzahl von Löchern (104 204 304 404 504) mit zunehmendem Abstand von der Mitte der Platte (102 202 302 402 502) in der Größe abnimmt.

9. Diffusorplatte (100 200 300 400 500 600) nach einem der vorhergehenden Ansprüche, wobei ein Bereich der Platte (102 202 302 402 502) keine Löcher (104 204 304 404 504) aufweist; wodurch eine von einem Fluideinlass aufgenommene Fluidfahne über die Oberfläche der Platte (102 202 302 402 502) diffundiert.

10. Vorrichtung zum Speichern eines Fluids, die Folgendes umfasst:
ein Gefäß (152 352 452 650), das einen Fluideinlass und einen Fluidauslass aufweist; und
eine Diffusorplatte (100 200 300 400 500 600) nach einem der Ansprüche 1 bis 9;
wobei die Diffusorplatte (100 200 300 400 500 600) über dem Fluideinlass in dem Gefäß (152 352 452 650) positioniert ist.

11. Vorrichtung nach Anspruch 10, wobei die mindestens eine Wand (110 210 310 410 510) der Diffusorplatte (100 200 300 400 500 600) eine Höhe aufweist, die so angeordnet ist, dass sie sich im Wesentlichen bis zur Basis des Gefäßes (152 352 452 650) erstreckt.

12. Vorrichtung nach Anspruch 10 oder 11, wobei die Höhe der mindestens einen Wand (110 210 310 410 510) über die Oberfläche der Platte (102 202 302 402 502) variiert, so dass sich die mindestens eine Wand (110 210 310 410 510) in eine geformte Basis des Gefäßes (152 352 452 650) erstrecken kann.

13. Vorrichtung nach einem der Ansprüche 10 bis 12, wobei die Diffusorplatte (100 200 300 400 500 600) in der Basis des Gefäßes (152 352 452 650) positioniert ist; so dass Fluid, das über den Fluideinlass in das Gefäß (152 352 452 650) eintritt, auf die Diffusorplatte (100 200 300 400 500 600), vorzugsweise in einem zentralen Bereich der Platte (100 200 300 400 500 600), trifft.

14. Vorrichtung nach einem der Ansprüche 10 bis 13, die ferner eine Heizvorrichtung (164 170 364 664) umfasst, die in dem Gefäß (152 352 452 650) vorgesehen ist, wobei die Heizung (164 170 364 664) so angeordnet ist, dass sie sich zu einem Boden des Gefäßes (152 352 452 650) erstreckt, wodurch die Diffusorplatte (100 200 300 400 500 600) und umgebendes Fluid erwärmt werden.

15. Verfahren zum Diffundieren eines Fluidstroms in einem Fluidspeichergefäß (152 352 452 650), wobei das Verfahren Folgendes umfasst:
Bereitstellen eines Gefäßes (152 352 452 650) mit einem Fluideinlass und einem Fluidauslass;
Bereitstellen einer Diffusorplatte (100 200 300 400 500 600) gemäß einem der Ansprüche 1 bis 9 in dem Gefäß (152 352 452 650); und
Positionieren der Diffusorplatte (100 200 300 400 500 600) bei Gebrauch über dem Fluideinlass.

## Revendications

1. Plaque de diffusion (100 200 300 400 500 600) servant à diffuser un écoulement de fluide dans un récipient de stockage de fluide (152 352 452 650), comportant :
une plaque (102 202 302 402 502) ayant une pluralité de trous (104 204 304 404 504) permettant à l'écoulement de fluide de passer au travers ; et
au moins une paroi (110 210 310 410 510) qui s'étend à l'opposé d'une surface de la plaque (102 202 302 402 502) ;
**caractérisée en ce que** ladite au moins une paroi (110 210 310 410 510) a une configuration généralement en forme de spirale en travers de la surface de la plaque (102 202 302 402 502).

2. Plaque de diffusion (100 200 300 400 500 600) selon la revendication 1, dans laquelle ladite au moins une paroi (110 210 310 410 510) est mise en œuvre sur une surface de la plaque (102 202 302 402 502) qui est agencée pour recevoir l'écoulement de fluide, de préférence dans laquelle la plaque (102 202 302 402 502) est sensiblement plate.

3. Plaque de diffusion (100 200 300 400 500 600) selon l'une quelconque des revendications précédentes, dans laquelle au moins certains de la pluralité de trous (104 204 304 404 504) sont espacés les uns des autres par ladite au moins une paroi (110 210 310 410 510).

4. Plaque de diffusion (100 200 300 400 500 600) selon l'une quelconque des revendications précédentes, dans laquelle la plaque (102 202 302 402 502) et/ou ladite au moins une paroi (110 210 310 410 510) sont formées à partir d'un matériau thermo-conducteur en mesure de fonctionner tel un dissipateur thermique.

5. Plaque de diffusion (100 200 300 400 500 600) selon l'une quelconque des revendications précédentes, dans laquelle ladite au moins une paroi (110 210 310 410 510) est agencée pour définir au moins une trajectoire de fluide qui s'étend en travers d'au moins une partie de la surface de la plaque (102 202 302 402 502), dans laquelle ladite au moins une trajectoire de fluide passe par un ou plusieurs de la pluralité de trous (104 204 304 404 504), de préférence dans laquelle les trous de la pluralité de trous (104 204 304 404 504) sont agencés sur la surface de la plaque (102 202 302 402 502) selon un motif qui correspond sensiblement à la forme de ladite au moins une trajectoire de fluide.

6. Plaque de diffusion (100 200 300 400 500 600) selon l'une quelconque des revendications précédentes, dans laquelle ladite au moins une paroi (110 210 310 410 510) est formée à partir d'au moins une bande continue de matériau.

7. Plaque de diffusion (100 200 300 400 500 600) selon l'une quelconque des revendications précédentes, dans laquelle les trous de la pluralité de trous (104 204 304 404 504) sont agencés de telle sorte qu'un fluide traversant les trous (104 204 304 404 504) aura une distribution d'écoulement sensiblement égale en travers de la surface de la plaque (102 202 302 402 502), de préférence dans laquelle les trous de la pluralité de trous (104 204 304 404 504) ont une distribution non uniforme en travers de la surface de la plaque (102 202 302 402 502).

8. Plaque de diffusion (100 200 300 400 500 600) selon l'une quelconque des revendications précédentes, dans laquelle les trous de la pluralité de trous (104 204 304 404 504) ont des tailles non uniformes, de préférence dans laquelle les trous de la pluralité de trous (104 204 304 404 504) diminuent en taille au fur et à mesure que leur distance par rapport au centre de la plaque (102 202 302 402 502) augmente.

9. Plaque de diffusion (100 200 300 400 500 600) selon l'une quelconque des revendications précédentes, dans laquelle une région de la plaque (102 202 302 402 502) est exempte de trous (104 204 304 404 504), pour de ce fait diffuser un panache de fluide reçu en provenance d'une entrée de fluide en travers de la surface de la plaque (102 202 302 402 502).

10. Appareil servant à stocker un fluide, comportant :
un récipient (152 352 452 650) ayant une entrée de fluide et une sortie de fluide ; et
une plaque de diffusion (100 200 300 400 500 600) selon l'une quelconque des revendications 1 à 9 ;
dans lequel la plaque de diffusion (100 200 300 400 500 600) est positionnée au-dessus de l'entrée de fluide dans le récipient (152 352 452 650).

11. Appareil selon la revendication 10, dans lequel ladite au moins une paroi (110 210 310 410 510) de la plaque de diffusion (100 200 300 400 500 600) a une hauteur agencée pour s'étendre sensiblement jusqu'à la base du récipient (152 352 452 650).

12. Appareil selon la revendication 10 ou la revendication 11, dans lequel la hauteur de ladite au moins une paroi (110 210 310 410 510) varie en travers de surface de la plaque (102 202 302 402 502), de telle sorte que ladite au moins une paroi (110 210 310 410 510) peut s'étendre jusque dans une base profilée du récipient (152 352 452 650).

13. Appareil selon l'une quelconque des revendications 10 à 12, dans lequel la plaque de diffusion (100 200 300 400 500 600) est positionnée dans la base du récipient (152 352 452 650), de telle sorte que le fluide entrant dans le récipient (152 352 452 650) par le biais de l'entrée de fluide rencontre la plaque de diffusion (100 200 300 400 500 600), de préférence au niveau d'une région centrale de la plaque (100 200 300 400 500 600).

14. Appareil selon l'une quelconque des revendications 10 à 13, comportant par ailleurs un corps de chauffe (164 170 364 664) mis en œuvre à l'intérieur du récipient (152 352 452 650), dans lequel le corps de chauffe (164 170 364 664) est agencé pour s'étendre vers une base du récipient (152 352 452 650), pour de ce fait chauffer la plaque de diffusion (100 200 300 400 500 600) et le fluide environnant.

15. Procédé servant à diffuser un écoulement de fluide dans un récipient de stockage de fluide (152 352 452 650), le procédé comportant les étapes consistant à :
mettre en œuvre un récipient (152 352 452 650) ayant une entrée de fluide et une sortie de fluide ;
mettre en œuvre dans le récipient (152 352 452 650) une plaque de diffusion (100 200 300 400 500 600) selon l'une quelconque des revendications 1 à 9 ; et
positionner la plaque de diffusion (100 200 300 400 500 600), lors de l'utilisation, au-dessus de l'entrée de fluide.
